# EUROPÄISCHE PATENTANMELDUNG

(11) **EP 4 070 956 A1**
(43) Veröffentlichungstag der Anmeldung: **12.10.2022**
(21) Anmeldenummer: 21167202.7
(22) Anmeldetag: 07.04.2021
(51) Int. Cl.: B33Y 80/00, H02K 3/26, H02K 3/04, H02K 3/47, H02K 3/50

(54) **ADDITIV GEFERTIGTE LUFTSPALTWICKLUNG FÜR EINE ELEKTRISCHE MASCHINE**

(71) Anmelder: Maxon International AG, 6072 Sachseln (CH)
(72) Erfinder: Rudolph, Johannes, 04651 Bad Lausick OT Ebersbach (DE); Lorenz, Fabian, 09126 Chemnitz (DE); Prof. Werner, Ralf, 09117 Chemnitz (DE); Busse-Grawitz, Max Erick, 6055 Alpnach Dorf (CH)
(74) Vertreter: Grünecker Patent- und Rechtsanwälte PartG mbB

(57) **Zusammenfassung**

Die vorliegende Erfindung betrifft eine additiv gefertigte Luftspaltwicklung für eine elektrische Maschine. Die Luftspaltwicklung umfasst einen hohlzylindrischen Hauptabschnitt mit einer geometrischen Achse, wobei der Hauptabschnitt eine aktive Wicklungslänge der Luftspaltwicklung definiert und im Hauptabschnitt elektrische Wicklungsleiter der Luftspaltwicklung von einem ersten axialen Ende der Luftspaltwicklung zu einem zweiten axialen Ende der Luftspaltwicklung verlaufen. Die Luftspaltwicklung weist ferner einen ersten Wickelkopf am ersten axialen Ende der Luftspaltwicklung und einen zweiten Wickelkopf am zweiten axialen Ende der Luftspaltwicklung auf, wobei in den Wickelköpfen Wickelkopfverbindungen der Wicklungsleiter verlaufen. Erfindungsgemäß ist vorgesehen, dass die Wickelköpfe radial nach innen und/oder außen über den hohlzylindrischen Hauptabschnitt hervorstehen, wobei zumindest zwei der Wickelkopfverbindungen zumindest abschnittsweise derart in unterschiedlichen Abständen von der Achse verlaufen, dass die eine Wickelkopfverbindung die andere Wickelkopfverbindung zumindest abschnittsweise radial umschließt.

## Beschreibung

Die vorliegende Erfindung betrifft eine additiv gefertigte Luftspaltwicklung für eine elektrische Maschine nach dem Oberbegriff des unabhängigen Anspruchs 1.

Eine gattungsgemäße Luftspaltwicklung umfasst einen hohlzylindrischen Hauptabschnitt mit einer geometrischen Achse, wobei der Hauptabschnitt eine aktive Wicklungslänge der Luftspaltwicklung definiert und im Hauptabschnitt elektrische Wicklungsleiter der Luftspaltwicklung von einem ersten axialen Ende der Luftspaltwicklung zu einem zweiten axialen Ende der Luftspaltwicklung verlaufen. Die gattungsgemäße Luftspaltwicklung weist ferner einen ersten Wickelkopf am ersten axialen Ende der Luftspaltwicklung und einen zweiten Wickelkopf am zweiten axialen Ende der Luftspaltwicklung auf, wobei in den Wickelköpfen Wickelkopfverbindungen der Wicklungsleiter verlaufen.

Elektrische Maschinen mit Luftspaltwicklung sind aus dem Stand der Technik bekannt. Ihre Besonderheit liegt im Vergleich zu anderen Maschinen darin, dass auf ausgeprägte Pole zu Führung des magnetischen Flusses verzichtet wird. Die meist dreiphasig ausgeführte Wicklung ist hohlzylindrisch und wird außen in der Regel durch den Stator bzw. durch einen ebenfalls zylindrisch ausgeführten magnetischen Rückschluss begrenzt. Im Inneren befindet sich der Rotor. Alternativ bildet insbesondere bei bürstenkommutierten DC-Motoren die Luftspaltwicklung den Rotor.

Zur Bildung des Drehmoments tragen hauptsächlich parallel zur Achse verlaufende Leiterabschnitte der Wicklungsleiter bei. Zur Formung einer vollständigen Leiterschleife müssen Leiterabschnitte vorgesehen werden, die nicht parallel zur Achse verlaufen. Dieser Bereich der Wicklung wird Wickelkopf genannt und erzeugt hauptsächlich ohmsche Verluste, während der Anteil an der Drehmomentbildung gering ist. Die im Wickelkopf verlaufenden Abschnitte der Wicklungsleiter werden nachfolgend als Wickelkopfverbindungen bezeichnet. Bei herkömmlich gewickelten Luftspaltwicklungen werden für jede Phase beispielsweise je zwei sich gegenüberliegende Spulen zur magnetischen Felderzeugung benötigt. Diese sind meist als Formspulen ausgeführt, wobei der Spulendraht von speziellen Wickelmaschinen zirkular in einer Ebene gewickelt wird. Bedingt durch die Fertigungstechnologie sind nur in der Ebene liegende, nach einem bestimmten Muster wiederkehrende Verläufe des Spulendrahtes möglich. Um die Leistungsdichte oder den Wirkungsgrad von elektrischen Maschinen mit Luftspaltwicklung zu erhöhen, ist eine optimale Wickelkopfgeometrie bei gleichzeitig möglichst günstigem Verhältnis zwischen der aktiven Länge der Wicklung und dem Wickelkopf Gegenstand aktueller Entwicklungen und Forschung.

Aus EP 2437379 A2 und EP 2804293 A1 sind gewickelte Luftspaltwicklungen bekannt, bei welchen die Wickelköpfe in radialer Richtung nach innen bzw. außen hervorstehen. Dadurch wird das Verhältnis zwischen aktiver Wicklungslänge und Wickelkopflänge verbessert. Die Wicklungen sind zumeist aus einem Kupferdraht bzw. Kupferlitzendraht gewickelt. Die Verfahren zur Herstellung einer Spule mit dieser Geometrie sind sehr aufwendig und benötigen mehrere Prozessschritte. Zunächst werden die Spulen gewickelt, wobei nachträglich eine mechanische Umformung erfolgt, um die radial abstehenden Wickelköpfe zu erzeugen. Dabei besteht das Risiko, die Isolierung der Leiterdrähte zu beschädigen, was zu Kurzschlüssen und Ausfällen bei der Verwendung in einer elektrischen Maschine führen kann.

Aus CH 715403 A2 ist eine hohlzylindrische Wicklung gemäß dem Oberbegriff des unabhängigen Anspruchs 1 bekannt, welche in einem 3D-Druckverfahren hergestellt werden kann und rechteckige Leiterquerschnitte aufweist. Das Verhältnis zwischen aktiver Wicklungslänge und axialer Wickelkopflänge ist bei dieser Wicklung ungünstig.

Die vorliegende Erfindung hat sich zur Aufgabe gestellt, eine kompakt bauende Luftspaltwicklung anzugeben, mit der eine hohe Leistungsdichte bzw. ein hoher Wirkungsgrad der elektrischen Maschine erreicht werden kann, wobei die Luftspaltwicklung einen ausfallsicheren Betrieb der elektrischen Maschine gewährleisten können muss.

Die Aufgabe wird gelöst durch die Merkmale des unabhängigen Anspruchs 1. Demnach liegt bei einer gattungsgemäßen Luftspaltwicklung nach dem Oberbegriff des unabhängigen Anspruchs 1 dann eine erfindungsgemäße Lösung der Aufgabe vor, wenn die Wickelköpfe radial nach innen und/oder außen über den hohlzylindrischen Hauptabschnitt hervorstehen, wobei zumindest zwei der Wickelkopfverbindungen zumindest abschnittsweise derart in unterschiedlichen Abständen von der Achse verlaufen, dass die eine Wickelkopfverbindung die andere Wickelkopfverbindung zumindest abschnittsweise radial umschließt. Vorzugsweise trifft das auf mehrere Paare von Wickelkopfverbindungen zu.

Vorteilhafte Ausgestaltungen der vorliegenden Erfindung sind Gegenstand der Unteransprüche.

Gemäß einer bevorzugten Ausführungsform der vorliegenden Erfindung ist vorgesehen, dass die sich radial umschließenden Wickelkopfverbindungen entlang von Kreiskurven mit unterschiedlichen Radien verlaufen. Dadurch kann eine besonders kompakte Bauweise erreicht werden. Es ist dabei von besonderem Vorteil, wenn der Mittelpunkt der Kreiskurven auf der Achse des hohlzylindrischen Hauptabschnitts der erfindungsgemäßen Luftspaltwicklung liegt. Vorzugsweise können die Wickelkopfverbindungen entlang von Kreiskurven mit zumindest drei unterschiedlichen Radien verlaufen. Mit anderen Worten bestehen bei diesem Ausführungsbeispiel vorzugsweise zumindest drei radiale Level, auf welchen die Wickelkopfverbindungen verlaufen können.

Gemäß einer besonders bevorzugten Ausführungsform der vorliegenden Erfindung ist dabei vorgesehen, dass die Wickelkopfverbindungen im ersten Wickelkopf entlang von Kreiskurven verlaufen, deren Radius größer oder im Wesentlichen gleich dem mittleren Radius des hohlzylindrischen Hauptabschnitts ist, wobei die Wickelkopfverbindungen im zweiten Wickelkopf entlang von Kreiskurven verlaufen, deren Radius kleiner oder im Wesentlichen gleich dem mittleren Radius des hohlzylindrischen Hauptabschnitts ist. Die Angabe "Im Wesentlichen gleich" bedeutet in diesem Zusammenhang, dass die betreffende Wickelkopfverbindung innerhalb der gedanklich verlängerten inneren und äußeren Mantelflächen des hohlzylindrischen Hauptabschnitts verläuft.

Gemäß einer weiteren bevorzugten Ausführungsform der vorliegenden Erfindung ist vorgesehen, dass zumindest einige der Wickelkopfverbindungen im ersten und oder zweiten Wickelkopf in unterschiedlichen Ebenen verlaufen, welche axial voneinander beabstandet sind. Auch diese Ausführungsform trägt zu einer kompakten Bauweise bei. Eine einzelne Wickelkopfverbindung verbindet jeweils zwei im Hauptabschnitt verlaufende Wicklungsleiterabschnitte und kann dabei entweder in einer einzigen Ebene oder aber abschnittsweise in unterschiedlichen Ebenen verlaufen.

Besonders bevorzugt sind die unterschiedlichen Ebenen senkrecht zur Achse ausgerichtet, wodurch der Aufbau vereinfacht, und eine besonders kompakte Bauweise erreicht wird.

Gemäß einer weiteren bevorzugten Ausführungsform der vorliegenden Erfindung ist vorgesehen, dass die Luftspaltwicklung zumindest zwei Phasen aufweist, wobei die Wickelkopfverbindungen einer Phase axial oder radial versetzt zu den Wickelkopfverbindungen einer anderen Phase sind.

Als besonders vorteilhaft hat sich dabei herausgestellt, wenn zwischen den Wickelkopfverbindungen unterschiedlicher Phasen am zweiten Wickelkopf ein axialer Versatz besteht, wobei der zweite Wickelkopf radial nach innen über den hohlzylindrischen Hauptabschnitt hervorsteht.

In einer weiteren besonders vorteilhaften Ausführungsform besteht zwischen den Wickelkopfverbindungen unterschiedlicher Phasen am ersten Wickelkopf ein axialer Versatz, wobei der erste Wickelkopf radial nach außen über den hohlzylindrischen Hauptabschnitt hervorsteht.

Gemäß einer weiteren besonders bevorzugten Ausführungsform der vorliegenden Erfindung ist vorgesehen, dass die wirksame Gesamtlänge aller Wickelkopfverbindungen einer einzelnen Phase der Luftspaltwicklung bei sämtlichen Phasen der Luftspaltwicklung im Wesentlichen gleich ist.

Die wirksame Gesamtlänge bestimmt den ohmschen Widerstand und hängt nicht nur von der Summe aller Wickelkopfverbindungslängen ab, sondern auch von der Leiterquerschnittsfläche. Vorzugsweise kann diese unter den einzelnen Wickelkopfverbindungen oder auch entlang einer einzelnen Wickelkopfverbindung variieren, um einen einheitlichen ohmschen Widerstand aller Phasen zu erreichen bzw. den ohmschen Widerstand generell zu reduzieren. "Im Wesentlichen gleich" bedeutet in diesem Zusammenhang, dass der resultierende ohmsche Widerstand jeder Phase um höchstens 5%, vorzugsweise um höchstens 2 %, von dem ohmschen Widerstand derjenigen Phase mit dem geringsten ohmschen Widerstand abweicht.

Besonders vorteilhaft ist es, wenn diejenige Phase der Luftspaltwicklung, die am ersten Wickelkopf die längsten Wickelkopfverbindungen aufweist, gleichzeitig am zweiten Wickelkopf die kürzesten Wickelkopfverbindungen aufweist, wobei diejenige Phase der Luftspaltwicklung, die am ersten Wickelkopf die kürzesten Wickelkopfverbindungen aufweist, gleichzeitig am zweiten Wickelkopf die längsten Wickelkopfverbindungen aufweist.

Gemäß einer weiteren besonders bevorzugten Ausführungsform der vorliegenden Erfindung ist vorgesehen, dass die Wicklungsleiter im Hauptabschnitt parallel zur Achse der Luftspaltwicklung verlaufen. Dadurch wird ein hoher Wirkungsgrad erreicht. Die im Hauptabschnitt zwischen den Wickelköpfen verlaufenden Abschnitte der Wicklungsleiter können in diesem Fall als Axialleiter bezeichnet werden. Vorzugsweise weisen alle Wicklungsleiter im Hauptabschnitt dabei denselben Abstand zur Achse auf.

Gemäß einer weiteren besonders bevorzugten Ausführungsform der vorliegenden Erfindung ist dabei vorgesehen, dass die im Hauptabschnitt zwischen den Wickelköpfen verlaufenden Abschnitte der Wicklungsleiter jeweils einen Querschnitt aufweisen, der die Form eines Kreisringsektors hat, wobei der äußere und innere Kreisringbogen des Kreisringsektors vorzugsweise jeweils um einen Mittelpunkt auf der Achse verlaufen. Auch diese Ausführungsform trägt zu einer Optimierung der kompakten Bauweise bzw. des Wirkungsgrads bei.

Gemäß einer weiteren bevorzugten Ausführungsform der vorliegenden Erfindung sind die Wicklungsleiter aus einem oder mehreren elektrisch leitenden Materialien gefertigt. Die erfindungsgemäß vorgesehene additive Fertigung erfordert dabei den Einsatz einer Paste mit metallischen und/oder elektrisch leitenden Partikeln. Die Paste wird mit einer feinen Düse schichtweise aufgetragen. Die so erstellten Strukturen werden anschließend in einem Sinterprozess verfestigt, bei dem die Binder der Paste entfernt werden und die Partikel miteinander verschmelzen. Die Wicklungsleiter können aus einem elektrisch leitenden beziehungsweise metallischen Material wie bspw. Kupfer, Aluminium, Gold, Silber oder einer Metalllegierung wie bspw. einer Kupferlegierung, einer Aluminiumlegierung oder einem anderen 3-D-Druck fähigen elektrisch leitenden Material wie bspw. leitende Kunststoffe oder Nanotubes gefertigt sein. Die Wicklungsleiter können auch aus mehreren elektrisch leitenden Materialien bestehen. Die Wicklungsleiter können bspw. abschnittsweise aus verschiedenen Materialien bestehen oder ein Wicklungsleiter kann im Kern ein elektrisch leitendes Material enthalten welches von einem weiteren elektrisch leitenden Material umgeben ist. Damit kann beispielsweise der elektrische Leitwert, die mechanische Festigkeit, thermische Ausdehnungskoeffizienten oder die Temperaturbeständigkeit des Leitermaterials an verschiedenen Positionen in dem Wicklungsleiter an die Anforderungen angepasst werden. Beispielsweise können in gewissen Bereichen des Hauptabschnittes oder der Wickelköpfen die mechanischen Belastungen durch Vibrationen höher sein wodurch bevorzugt ein Material verwendet werden kann, welches gute mechanische Eigenschaften aufweist. An anderen Stellen stehen thermische Eigenschaften des Leitermaterials im Vordergrund. An wiederum anderen Stellen ist auf einen geringen elektrischen Widerstand zu achten. Somit lässt sich für jeden Bereich des Wicklungsleiters ein optimiertes Leitermaterial fertigen.

Gemäß einer weiteren bevorzugten Ausführungsform der vorliegenden Erfindung sind die Wicklungsleiter von einer Isolation, bestehend aus einem oder mehreren Isolationsmaterialien, umgeben bzw. in die Isolation eingebettet. Als Isolationsmaterial, kann bspw. Keramik verwendet werden. Die keramische Isolation bildet somit eine Matrix, in welche die Wicklungsleiter der gedruckten Luftspaltwicklung eingebettet sind. Zur Herstellung der Isolation im additiven Fertigungsverfahren kommt eine ähnliche Paste mit keramischen Partikeln zum Einsatz. Die keramische Isolationsmatrix verhindert zum einen, dass sich die Leiter berühren und dadurch Kurzschlüsse bilden. Im Vergleich zu konventionellen Isolationssystemen weist die keramische Isolation eine höhere Temperaturbeständigkeit auf. Gleichzeitig gewährleistet sie eine höhere thermische Leitfähigkeit, was zu einem verbesserten Wärmeabgabevermögen und damit zu einer besseren Leiterkühlung führt. Dadurch kann die Leistungsdichte gesteigert werden. Die keramische Isolationsmatrix übernimmt für die in sie eingebetteten elektrischen Leiter zudem eine Stützfunktion und schützt sie vor elektromagnetisch induzierten und mechanisch verursachten Schwingungen, die zu Ermüdungsbrüchen führen können. Die Wicklungsleiter können auch in eine Isolation aus einem weiteren Isolationsmaterial wie bspw. Harz oder Kunststoff eingebettet werden. Zur Herstellung der Isolation im additiven Fertigungsverfahren kann ebenfalls eine Paste mit den genannten Isolationspartikeln zum Einsatz kommen. Die Wicklungsleiter können auch mit einem oder mehreren Isolationsmaterialien umgeben bzw. eingebettet sein. Es ist auch möglich, dass verschiedene Wicklungsleiter in unterschiedliche Isolationsmaterialien oder dass ein Wicklungsleiter abschnittsweise in unterschiedliche Isolationsmaterialien eingebettet ist. Gewisse Isolationsmaterialien haben bspw. einen hohen elektrischen Isolationswert. Andere Materialien weisen gute thermische oder mechanische Eigenschaften auf. Die Anforderungen an das Isolationsmaterial können wie beim Leitermaterial beschrieben, auch abhängig von der Position am Wicklungsleiter sehr unterschiedlich sein. Durch die Verwendung unterschiedlicher Isolationsmaterialien, lässt sich für jeden Bereich des Wicklungsleiters ein optimales Isolationsmaterial verwenden. Weiter ist es auch möglich, den Wicklungsleiter von innen nach außen mit unterschiedlichen Isolationsmaterialien zu isolieren.

Die erfindungsgemäße Luftspaltwicklung weist vorzugsweise einen Durchmesser von weniger als 60 mm auf und ist für die Verwendung in Klein- oder Minimotoren vorgesehen.

Ausführungsbeispiele der vorliegenden Erfindung werden nachfolgend anhand von Zeichnungen erläutert.

Es zeigen:
- Figur 1: eine erfindungsgemäße Luftspaltwicklung gemäß einem ersten Ausführungsbeispiel in einer schematischen perspektivischen Darstellung,
- Figur 2: die erfindungsgemäße Luftspaltwicklung aus Figur 1 in einer weiteren schematischen perspektivischen Darstellung,
- Figur 3: die erfindungsgemäße Luftspaltwicklung aus den Figuren 1 und 2 in einer Seitenansicht,
- Figur 4: eine erfindungsgemäße Luftspaltwicklung gemäß einem zweiten Ausführungsbeispiel in einer Seitenansicht,
- Figur 5: einen Längsschnitt durch die erfindungsgemäße Luftspaltwicklung aus Figur 4,
- Figur 6: eine perspektivische Detailansicht des ersten Wickelkopfs der erfindungsgemäßen Luftspaltwicklung aus den Figuren 4 und 5,
- Figur 7: eine Draufsicht auf den ersten Wickelkopf der erfindungsgemäßen Luftspaltwicklung aus den Figuren 4 bis 6,
- Figur 8: eine perspektivische Detailansicht des zweiten Wickelkopfs der erfindungsgemäßen Luftspaltwicklung aus den Figuren 4 bis 7,
- Figur 9: eine Draufsicht auf den zweiten Wickelkopf der erfindungsgemäßen Luftspaltwicklung aus den Figuren 4 bis 8,
- Figur 10: einen Querschnitt durch die erfindungsgemäße Luftspaltwicklung aus den Figuren 4 ff. in der Ebene 1 (A) des ersten Wickelkopfs,
- Figur 11: einen Querschnitt durch die erfindungsgemäße Luftspaltwicklung aus den Figuren 4 ff. in der Ebene 2 (B) des ersten Wickelkopfs,
- Figur 12: einen Querschnitt durch die erfindungsgemäße Luftspaltwicklung aus den Figuren 4 ff. in der Ebene 3 (C) des ersten Wickelkopfs,
- Figur 13: einen Querschnitt durch die erfindungsgemäße Luftspaltwicklung aus den Figuren 4 ff. in der Ebene 4 (D) des ersten Wickelkopfs,
- Figur 14: einen Querschnitt durch die erfindungsgemäße Luftspaltwicklung aus den Figuren 4 ff. in der Ebene 5 (E) des ersten Wickelkopfs,
- Figur 15: einen Querschnitt durch die erfindungsgemäße Luftspaltwicklung aus den Figuren 4 ff. in der Ebene 1 (F) des zweiten Wickelkopfs,
- Figur 16: einen Querschnitt durch die erfindungsgemäße Luftspaltwicklung aus den Figuren 4 ff. in der Ebene 2 (G) des zweiten Wickelkopfs,
- Figur 17: einen Querschnitt durch die erfindungsgemäße Luftspaltwicklung aus den Figuren 4 ff. in der Ebene 3 (H) des zweiten Wickelkopfs,
- Figur 18: eine Legende zu den Figuren 10 bis 17.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

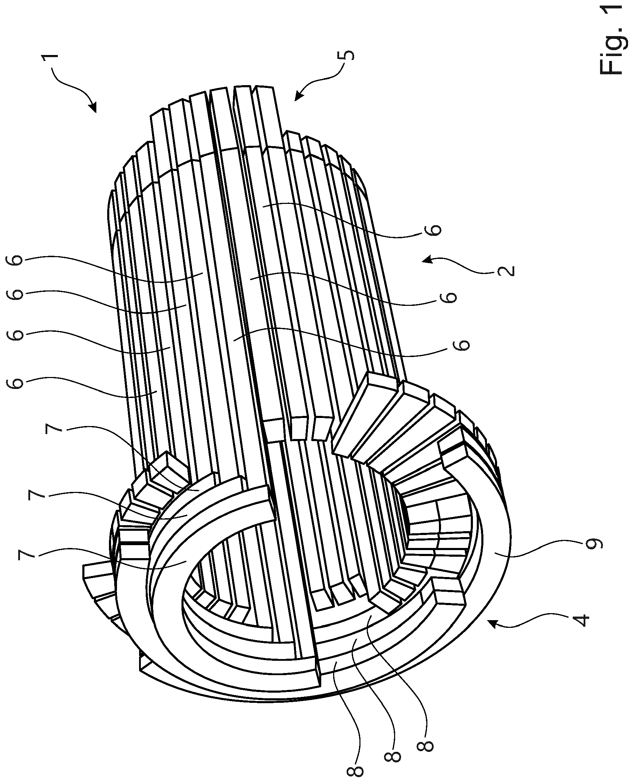

Die Figuren 1 bis 3 zeigen ein erstes schematisches Beispiel einer erfindungsgemäßen Luftspaltwicklung 1, das lediglich den grundsätzlichen Aufbau einer erfindungsgemäßen Luftspaltwicklung verdeutlichen soll.

Die Luftspaltwicklung weist einen hohlzylindrischen Hauptabschnitt 2 auf, in dem eine Vielzahl von Axialleitern 6 parallel zur Achse 3 der Luftspaltwicklung verlaufen. Die Länge des Hauptabschnitts 2 entspricht der aktiven Länge der Luftspaltwicklung. Denn die im Hauptabschnitt 2 verlaufenden Axialleiter 6 tragen zur Bildung des Drehmoments der elektrischen Maschine bei. Aus Figur 1 ist ersichtlich, dass die Axialleiter 6 im Hauptabschnitt 2 jeweils einen Querschnitt aufweisen, der die Form eines Kreisringsektors hat, wobei der äußere und innere Kreisringbogen des Kreisringsektors vorzugsweise jeweils um einen Mittelpunkt auf der Achse (3) verlaufen. An den beiden axialen Enden des Hauptabschnitts 2 sind die beiden Wickelköpfe 4 und 5 der Luftspaltwicklung zu erkennen. In diesen verlaufen die Wickelkopfverbindungen 7, 8, 9, 11, 12 und 13, über welche jeweils zwei Axialleiter miteinander verbunden sind. Die Wickelkopfverbindungen sind notwendig, erzeugen jedoch lediglich ohmsche Verluste und tragen nicht zur Drehmomenterzeugung bei.

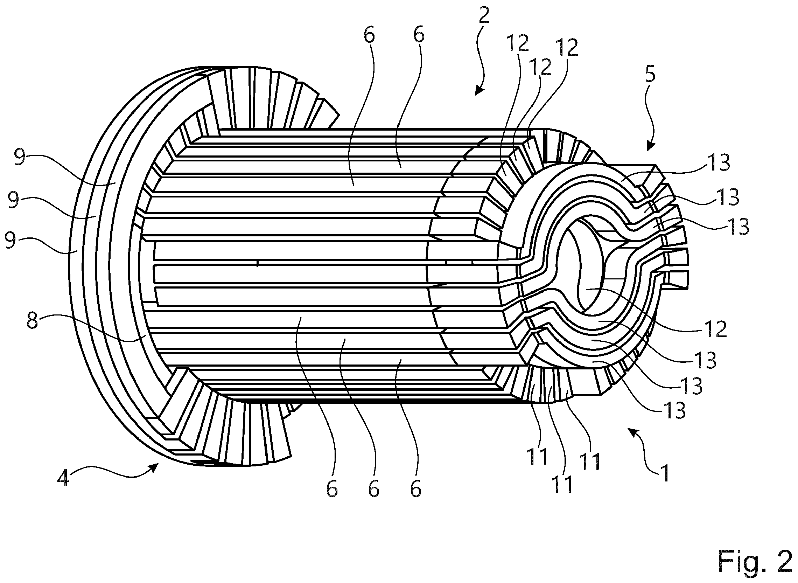

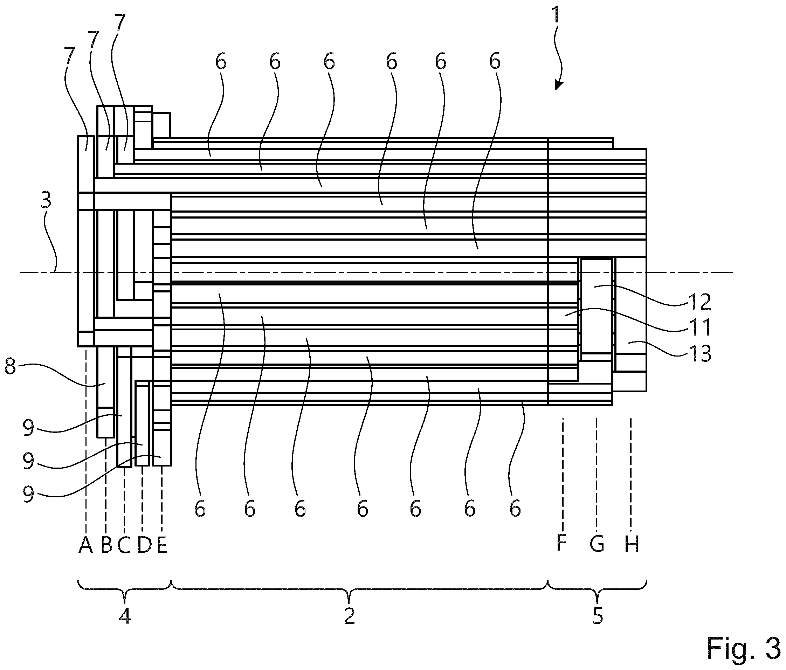

Die beiden Wickelköpfe 4 und 5 stehen radial in unterschiedlichen Richtungen über den hohlzylindrischen Hauptabschnitt 2 hervor. Der erste Wickelkopf 4 steht radial nach außen ab, während der zweite Wickelkopf 5 radial nach innen absteht. Wie aus Figur 3 hervorgeht, sind die Wickelkopfverbindungen 7, 8, 9, 11, 12 und 13 in mehreren axial voneinander beabstandeten Ebenen angeordnet. Der erste Wickelkopf 4 verfügt über die fünf Ebenen A, B, C, D und E. Die Wickelkopfverbindungen 7, 8, und 9 des ersten Wickelkopfes verlaufen somit in fünf unterschiedlichen Ebenen und, wie insbesondere aus Figur 1 hervorgeht, auch in drei unterschiedlichen radialen Leveln bzw. drei unterschiedlichen radialen abständen zur Mitte. An dieser Stelle sei darauf hingewiesen, dass aus Darstellungsgründen sowie der Übersichtlichkeit halber nur die Hälfte aller Wickelkopfverbindungen des ersten Wickelkopfes dargestellt sind. Der zweite Wickelkopf verfügt über die drei Ebenen F, G und H. Die Wickelkopfverbindungen 11, 12 und 13 des zweiten Wickelkopfes verlaufen somit in drei unterschiedlichen Ebenen und, wie insbesondere aus Figur 2 hervorgeht, ebenfalls in drei unterschiedlichen radialen Leveln. Generell verlaufen die Wickelkopfverbindungen an jedem der beiden Wickelköpfe entlang von Kreiskurven bzw. Kreisbögen mit drei unterschiedlichen Radien, wobei der Mittelpunkt der Kreiskurven bzw. Kreisbögen auf der Achse 3 liegt.

Die in den Figuren 1 bis 3 dargestellte Luftspaltwicklung weist drei Phasen auf. Die Wickelkopfverbindungen 7 und 13 sowie die dazwischen verlaufenden Axialleiter 6 gehören zur ersten Phase, die Wickelkopfverbindungen 8 und 12 sowie die dazwischen verlaufenden Axialleiter 6 gehören zur zweiten Phase, und die Wickelkopfverbindungen 9 und 11 sowie die jeweils dazwischen verlaufenden Axialleiter 6 gehören zur dritten Phase. Am ersten Wickelkopf 4 besteht zwischen den Wickelkopfverbindungen 7, 8 und 9 der drei unterschiedlichen Phasen ein radialer Versatz, am zweiten Wickelkopf 5 besteht hingegen ein axialer Versatz zwischen den Wickelkopfverbindungen 11, 12 und 13 der drei unterschiedlichen Phasen. Am ersten Wickelkopf verlaufen die äußeren Wickelkopfverbindungen 9 der dritten Phase auf Kreiskurven mit dem größten Radius und umschließen somit die mittleren Wickelkopfverbindungen 8 der zweiten Phase sowie die inneren Wickelkopfverbindungen 7 der ersten Phase radial. Am zweiten Wickelkopf 5 verlaufen die Wickelkopfverbindungen einer einzelnen Phase hingegen konzentrisch, und zwar auf Kreiskurven mit drei unterschiedlichen Radien.

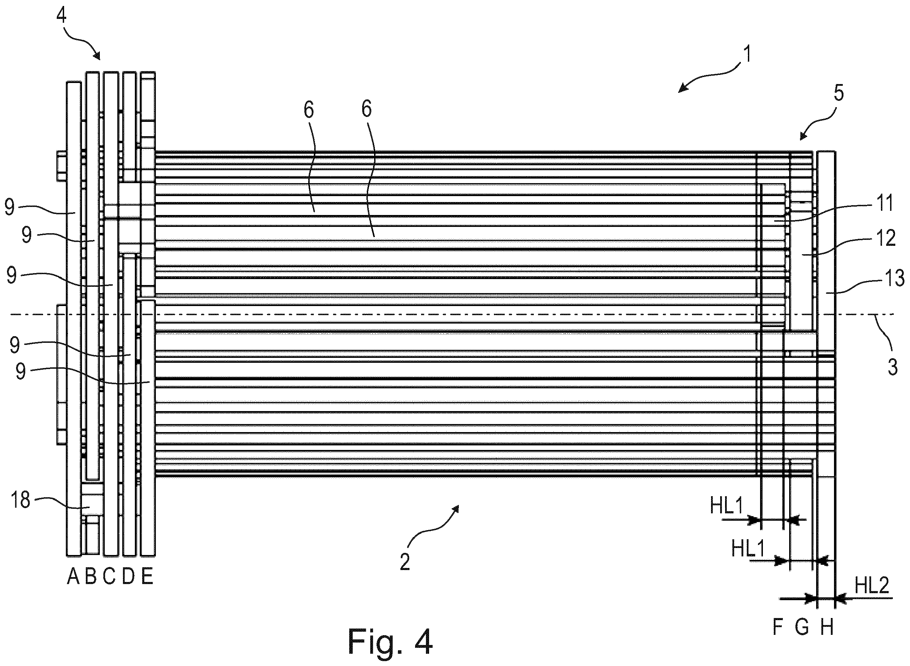

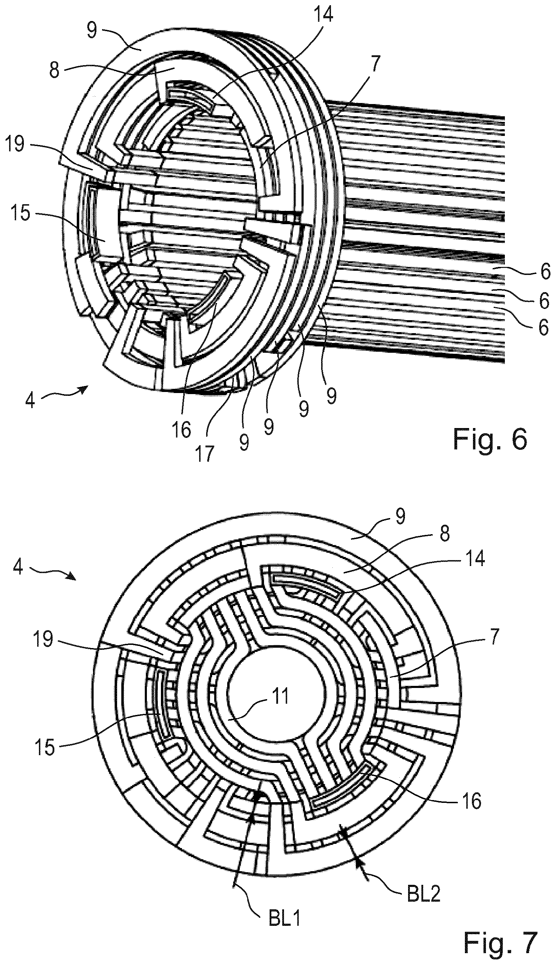

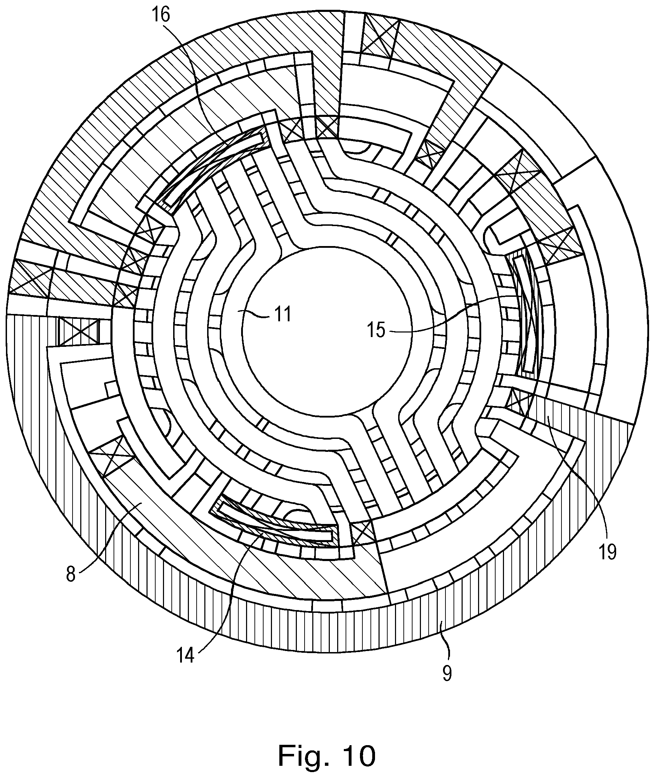

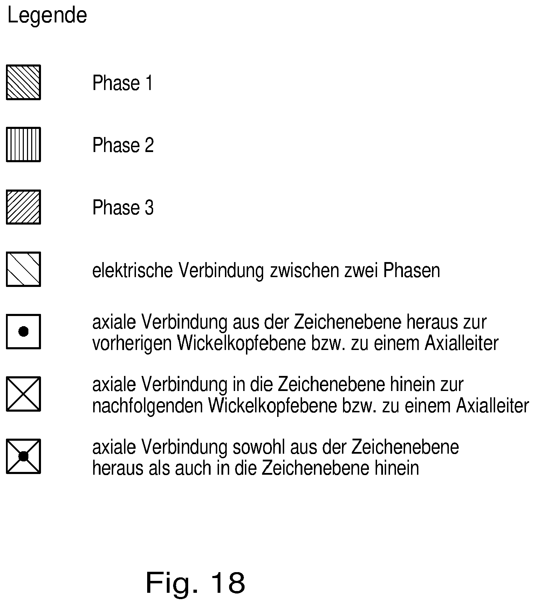

Während die Figuren 1 bis 3 lediglich ein schematisches Beispiel zeigen, zeigen die Figuren 4 bis 17 ein konkretes Ausführungsbeispiel einer erfindungsgemäßen Luftspaltwicklung. Bis auf die Anordnung der Wickelkopfleiter im ersten Wickelkopf stimmt der generelle Aufbau mit dem schematischen Beispiel aus den Figuren 1 bis 3 überein. Am ersten Wickelkopf sind jedoch zusätzliche Strukturen in Form von elektrischen Leitern vorgesehen, die dazu dienen, einen Sternpunkt herzustellen. Die Anordnung der Wickelkopfleiter am ersten Wickelkopf 4 ist daher etwas komplizierter, so dass sich eine eindeutige Zuordnung der Wickelkopfleiter zu den drei unterschiedlichen Phasen anhand der Figuren 4 bis 9 nicht auf den ersten Blick vornehmen lässt. Der exakte Verlauf der Wickelkopfleiter kann jedoch anhand der Querschnittsdarstellungen in den Figuren 10 bis 17 nachvollzogen werden. Eine Legende zu der in den Figuren 10 bis 17 verwendeten Schraffierung sowie zu den verwendeten Symbolen findet sich in Figur 18. Der erste Wickelkopf 4 ist im Detail in den Figuren 6 und 7 gezeigt. Aus diesen beiden Figuren ist auch ersichtlich, dass drei Anschlüsse 14, 15 und 16 für die drei unterschiedlichen Phasen vorgesehen sind. Die Verbindung kann vorzugsweise über eine Lötverbindung realisiert werden. Die drei Anschlüsse 14, 15 und 16 weisen zu diesem Zweck Vertiefungen auf, die zur Aufnahme der Anschlussleitung und des Lots ausgebildet sind. In den Figuren 4, 6 und 7 ist ferner zur erkennen, dass der Wickelkopf 4 verschiedene Verbindungsstücke aufweist. Das in Figur 6 gezeigte axiale Verbindungsstück 17 dient beispielsweise zur Verbindung zwischen den Ebenen 3 (C) und 5 (E) des ersten Wickelkopfs 4. Das in Figur 4 gezeigte axiale Verbindungsstück 18 dient zur Verbindung zwischen den Ebenen 1 (A) und 3 (C). Ebenfalls in Figur 6 und in Figur 7 ist beispielsweise ein radiales Verbindungsstück 19 gekennzeichnet, über welches die Verbindung von einem der Axialleiter 6 zur zugehörigen äußeren Wickelkopfverbindung 9 hergestellt wird. Es wird darauf hingewiesen, dass die Verbindungsstücke streng genommen zu den Wickelkopfverbindungen zählen.

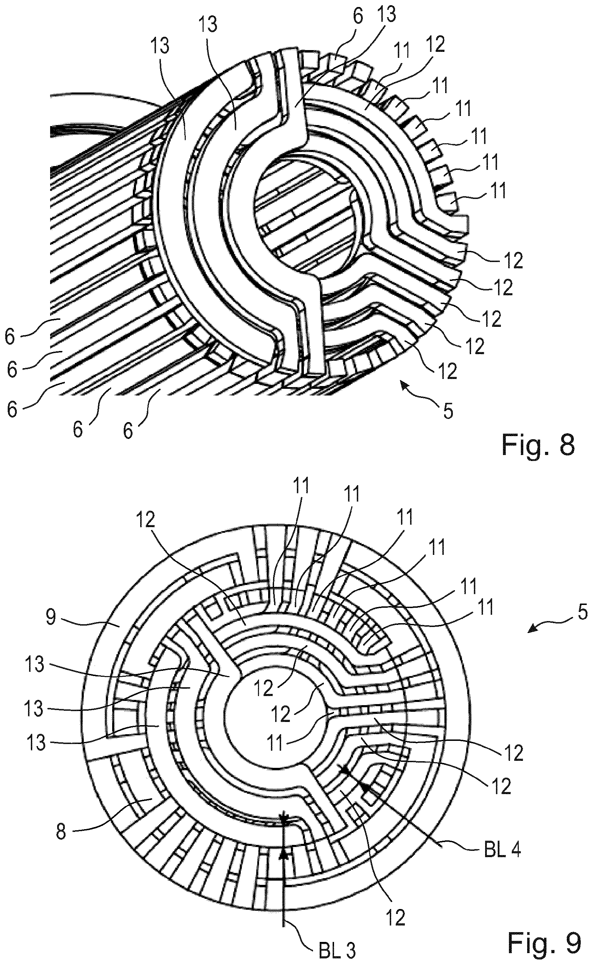

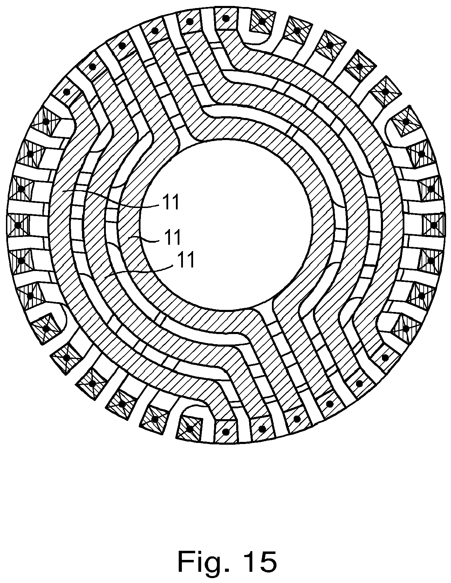

Figur 8 zeigt eine perspektivische Detailansicht des zweiten Wickelkopfs der erfindungsgemäßen Luftspaltwicklung aus den Figuren 4 bis 7. Die Axialleiter 6 bilden den holzylindrischen Hauptabschnitt 2. Am zweiten Wickelkopf 5 sind die Wickelkopfverbindungen 11 der Ebene 1 (F) gezeigt. Diese werden in der Figur größtenteils durch die Wickelkopfverbindungen 12 in der Ebene 2 (G) abgedeckt. Die Wickelkopfverbindungen 13 der Ebene 3 (H) sind nur teilweise dargestellt, um die darunterliegenden Wickelkopfverbindungen nicht vollständig zu überdecken. Der genaue Verlauf der Wickelkopfverbindungen des zweiten Wickelkopfes ist in den Figuren 15 bis 17 dargestellt.

Figur 9 zeigt eine Draufsicht auf den zweiten Wickelkopf der erfindungsgemäßen Luftspaltwicklung aus den Figuren 4 bis 8. In der Figur 9 sind ebenfalls die mittleren Wickelkopfverbindungen 8 des ersten Wickelkopfs sowie die äußeren Wickelkopfverbindungen 9 des ersten Wickelkopfs, welche am gegenüberliegenden Ende der Luftspaltwicklung 1 angeordnet sind sichtbar. Am zweiten Wickelkopf 5 sind die Wickelkopfverbindungen 11 der Ebene 1 (F) sowie die Wickelkopfverbindungen 12 in der Ebene 2 (G) und die Wickelkopfverbindungen 13 der Ebene 3 (H) gezeigt. Der genaue Verlauf der Wickelkopfverbindungen des zweiten Wickelkopfes ist in den Figuren 15 bis 17 dargestellt. Ebenfalls gezeigt ist die Leiterbreite BL3 der Wickelkopfverbindungen in der Ebene 3 (H) des zweiten Wickelkopfs und die Leiterbreite BL4 der Wickelkopfverbindungen in den Ebenen 1 (F) und 2 (G) des zweiten Wickelkopfs.

In den Figuren 8 und 9 ist der zweite Wickelkopf der erfindungsgemäßen Luftspaltwicklung aus den Figuren 4 bis 7 gezeigt. Der genaue Verlauf der Wickelkopfverbindungen des zweiten Wickelkopfes ist in den Figuren 15 bis 17 dargestellt.

In Figur 10 ist dabei ein Querschnitt durch die erfindungsgemäße Luftspaltwicklung aus den Figuren 4 bis 9 in der Ebene 1 (A) des ersten Wickelkopfs gezeigt. Am gegenüberliegenden Ende der Luftspaltwicklung 1 ist der zweite Wickelkopf 5 mit den Wickelkopfverbindungen 11 der Ebene 1 (F) gezeigt. In dem Querschnitt in der Ebene 1 (A) des ersten Wickelkopfs liegt der Anschluss 14 der Phase 1, sowie der Anschluss 15 der Phase 2 und der Anschluss 16 der Phase 3. Weiter sind radiale Verbindungsstücke 19 zwischen Axialleiter 6 und äußerer Wickelkopfverbindung 9 des ersten Wickelkopfs gezeigt. Ferner sind eine mittlere Wickelkopfverbindung 8 und eine äußere Wickelkopfverbindung 9 des ersten Wickelkopfs gezeigt. Die mit Bezugszeichen 8 gekennzeichnete mittlere Wickelkopfverbindung stellt gemäß Schraffur eine elektrische Verbindung zwischen zwei Phasen dar, während die mit Bezugszeichen 9 gekennzeichnete äußere Wickelkopfverbindung eine elektrische Verbindung der Phase 2 darstellt. In der Ebenen 1 (A) des ersten Wickelkopfs verlaufen Wickelkopfverbindungen der Phasen 1 und 2, sowie elektrische Verbindungen zwischen zwei Phasen.

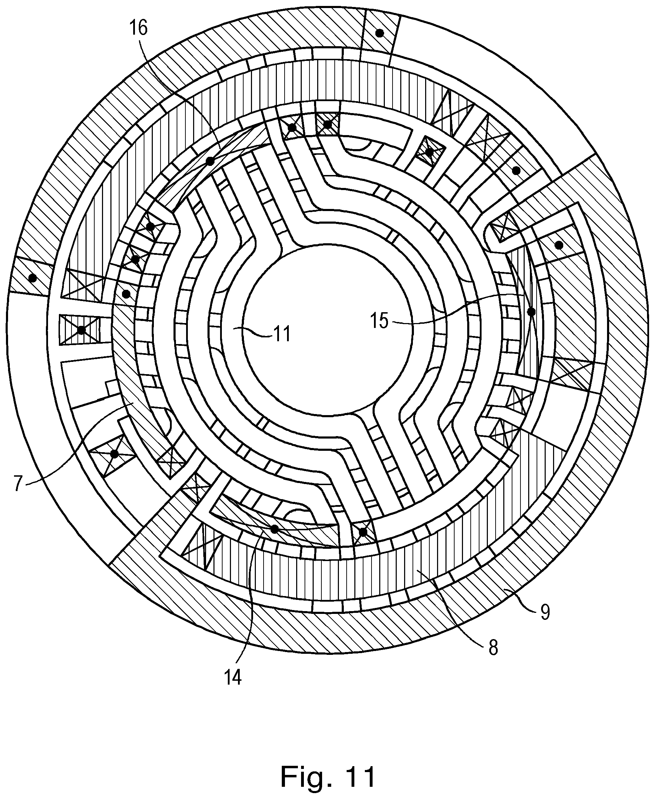

Die Figur 11 zeigt einen Querschnitt in der Ebene 2 (B) des ersten Wickelkopfs. Am gegenüberliegenden Ende der Luftspaltwicklung 1 ist wiederum der zweite Wickelkopf 5 mit den Wickelkopfverbindungen 11 der Ebene 1 (F) gezeigt. In dem Querschnitt in der Ebene 2 (B) des ersten Wickelkopfs liegt der Anschluss 14 der Phase 1, sowie der Anschluss 15 der Phase 2 und der Anschluss 16 der Phase 3. Weiter sind eine innere Wickelkopfverbindung 7, eine mittlere Wickelkopfverbindung 8 und eine äußere Wickelkopfverbindung 9 des ersten Wickelkopfs gezeigt. Die mit Bezugszeichen 7 und 9 gekennzeichneten innere und äußere Wickelkopfverbindungen stellen gemäß Schraffur eine elektrische Verbindung der Phase 1 dar, während die mit Bezugszeichen 8 gekennzeichnete mittlere Wickelkopfverbindung gemäß Schraffur eine elektrische Verbindung der Phase 2 darstellt.

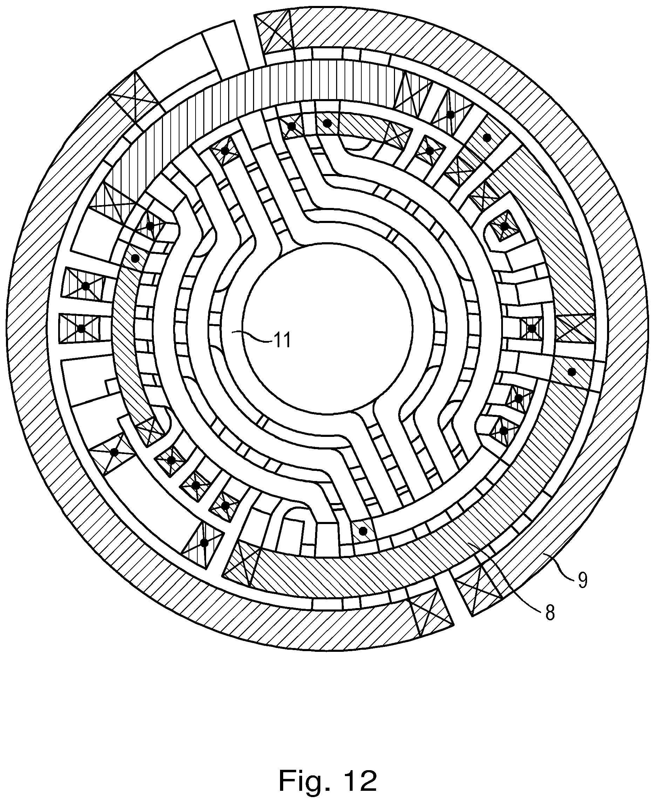

Figur 12 zeigt einen Querschnitt in der Ebene 3 (C) des ersten Wickelkopfs. Am gegenüberliegenden Ende der Luftspaltwicklung 1 ist wiederum der zweite Wickelkopf 5 mit den Wickelkopfverbindungen 11 der Ebene 1 (F) gezeigt. Gemäß den Schraffuren verlaufen in der Ebene 3 (C) des ersten Wickelkopfs Wickelkopfverbindungen aller drei Phasen. Die mit Bezugszeichen 8 gekennzeichnete mittlere Wickelkopfverbindungen stellt gemäß Schraffur eine elektrische Verbindung der Phase 1 dar, während die mit Bezugszeichen 9 gekennzeichnete äußere Wickelkopfverbindung gemäß Schraffur eine elektrische Verbindung der Phase 3 darstellt.

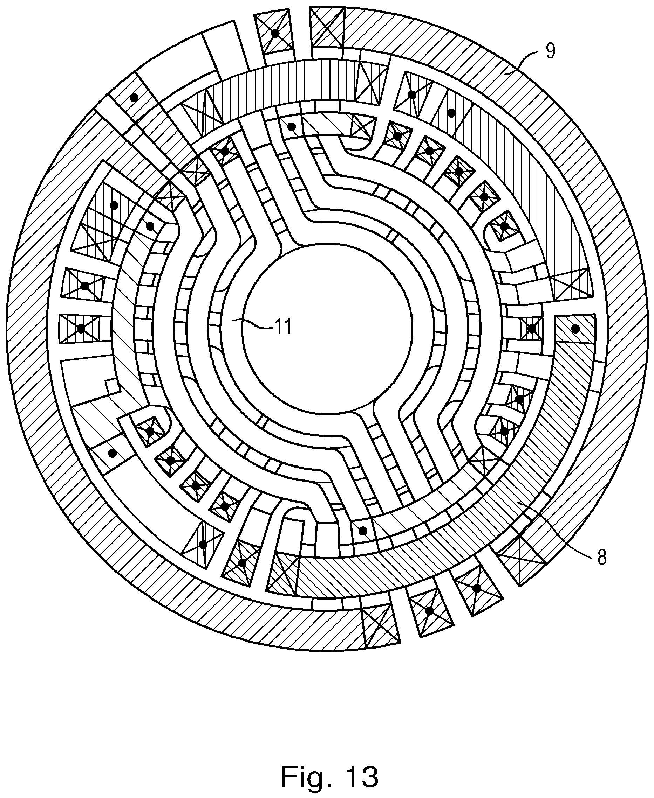

Figur 13 zeigt einen Querschnitt in der Ebene 4 (D) des ersten Wickelkopfs. Am gegenüberliegenden Ende der Luftspaltwicklung 1 ist wiederum der zweite Wickelkopf 5 mit den Wickelkopfverbindungen 11 der Ebene 1 (F) gezeigt. Gemäß den Schraffuren verlaufen auch in der Ebene 4 (D) des ersten Wickelkopfs Wickelkopfverbindungen aller drei Phasen. Weiter sind gemäß Schraffur in der Ebene 4 (D) des ersten Wickelkopfs elektrische Verbindungen zwischen den Phasen angeordnet.

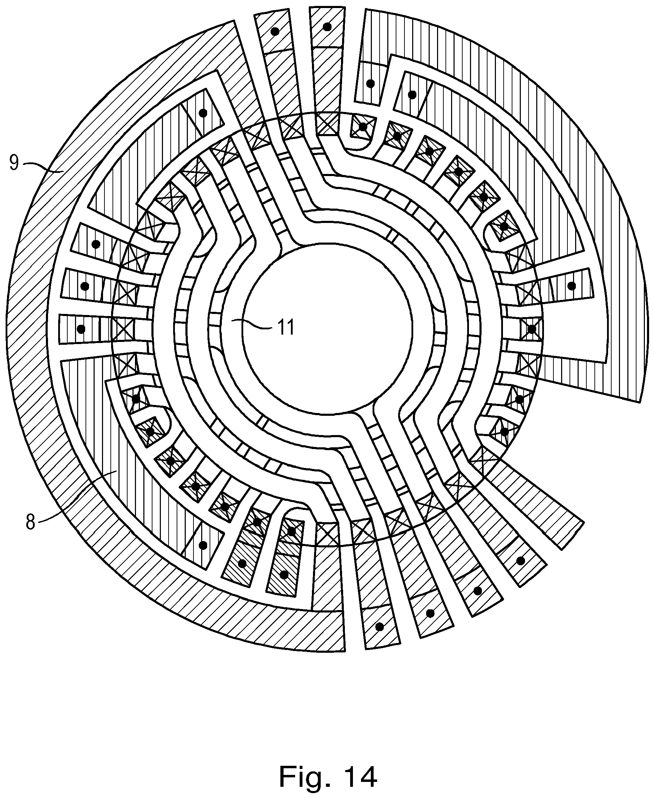

Figur 14 zeigt einen Querschnitt in der Ebene 5 (E) des ersten Wickelkopfs der erfindungsgemäßen Luftspaltwicklung. Am gegenüberliegenden Ende der Luftspaltwicklung 1 ist wiederum der zweite Wickelkopf 5 mit den Wickelkopfverbindungen 11 der Ebene 1 (F) gezeigt. Gemäß den Schraffuren verlaufen auch in der Ebene 5 (E) des ersten Wickelkopfs Wickelkopfverbindungen der Phasen 2 und 3. Die mit Bezugszeichen 8 gekennzeichnete mittlere Wickelkopfverbindungen stellt gemäß Schraffur eine elektrische Verbindung der Phase 2 dar, während die mit Bezugszeichen 9 gekennzeichnete äußere Wickelkopfverbindung gemäß Schraffur eine elektrische Verbindung der Phase 3 darstellt.

Figur 15 zeigt einen Querschnitt in der Ebene 1 (F) des zweiten Wickelkopfs der erfindungsgemäße Luftspaltwicklung. In der Ebene 1 (F) des zweiten Wickelkopfs verlaufen die Wickelkopfverbindungen 11. Die in dieser Ebenen verlaufenden Wickelkopfverbindungen sind gemäß Schraffur Wickelkopfverbindung der Phase 3.

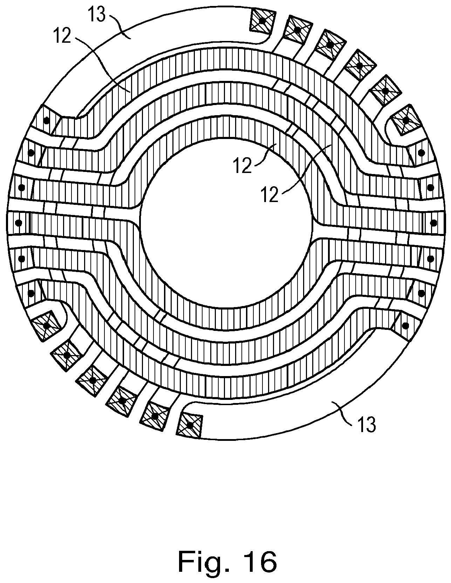

Figur 16 zeigt einen Querschnitt in der Ebene 2 (G) des zweiten Wickelkopfs der erfindungsgemäße Luftspaltwicklung. In der Ebene 2 (G) des zweiten Wickelkopfs verlaufen die Wickelkopfverbindungen 12. Ferner sind die Wickelkopfverbindungen 13 in der Ebene 3 des zweiten Wickelkopfs gezeigt. Gemäß Schraffur verlaufen in der Ebene 2 (G) Wickelkopfverbindungen der Phase 2.

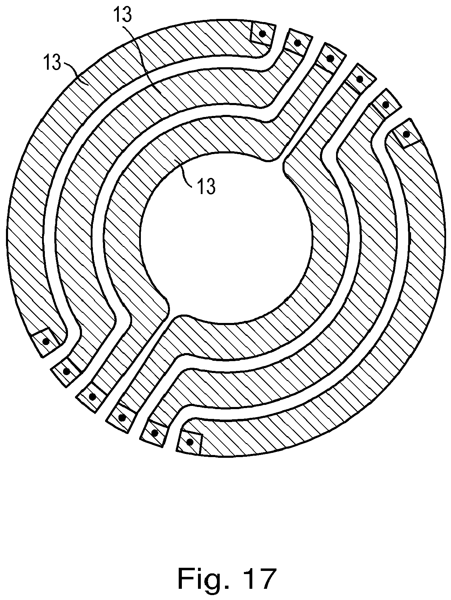

Figur 17 zeigt einen Querschnitt in der Ebene 3 (H) des zweiten Wickelkopfs der erfindungsgemäße Luftspaltwicklung. In der Ebene 3 (H) des zweiten Wickelkopfs verlaufen die Wickelkopfverbindungen 13. Die in dieser Ebenen verlaufenden Wickelkopfverbindungen sind gemäß Schraffur Wickelkopfverbindung der Phase 1.

Anhand der Figuren 15 bis 17 ist ersichtlich, dass die Wickelkopfverbindungen jeweils einer Phase auf einer axialen Ebene des Wickelkopfes angeordnet sind. Hierdurch entsteht ein axialer Versatz zwischen unterschiedlichen Phasen im zweiten Wickelkopf.

Die dargestellte erfindungsgemäße Luftspaltwicklung ist in Bezug auf den ohmschen Widerstand der Wickelkopfverbindungen bzw. der Phasenwicklungen optimiert. Die inneren Wickelkopfverbindungen 7 des ersten Wickelkopfes 4 weisen die Leiterbreite BL1 auf, welche von dem durch den Außendurchmesser des Rotors und den Innendurchmesser des Stators begrenzten Bauraum abhängig ist. Die mittleren und äußeren Wickelkopfverbindungen 8 und 9 weisen die Leiterbreite BL2 auf. Diese ist größer als die Leiterbreite BL1. Da die Leiterhöhe für alle Wickelkopfverbindungen des ersten Wickelkopfs gleich ist, weisen die mittleren und äußeren Wickelkopfverbindungen im Vergleich zu den inneren Wickelkopfverbindungen einen größeren Querschnitt auf. Dies führt zu einem verringerten ohmschen Widerstand. Dadurch lässt sich die größere Länge der mittleren und äußeren Wickelkopfverbindungen ausgleichen. Darüber hinaus wird der Gesamtwiderstand eines Stranges verkleinert, wodurch ohmsche Verluste verringert und der Gesamtwirkungsgrad gesteigert werden können. In ähnlicher Weise weisen auch die Wickelkopfverbindungen des zweiten Wickelkopfes unterschiedliche Leiterbreiten BL3 und BL4 und auch unterschiedliche Leiterhöhen HL1 und HL2 auf.

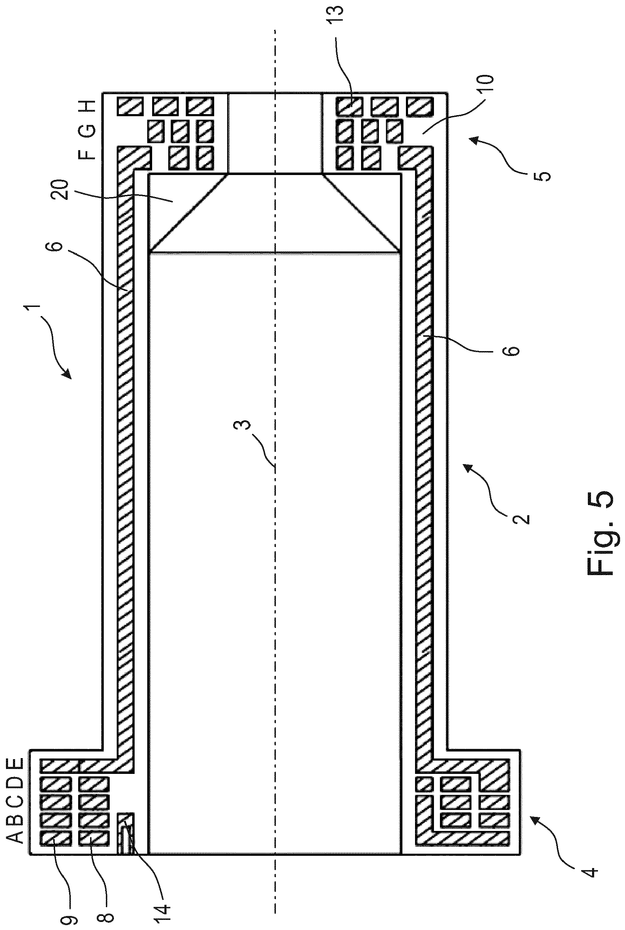

Aus dem Längsschnitt in Figur 5 geht hervor, dass die Wicklungsleiter der Luftspaltwicklung in eine keramische Isolations-Matrix 10 eingebettet sind. Die keramische Isolation ist aus Darstellungsgründen und der Übersichtlichkeit halber in den anderen Figuren nicht dargestellt. Die Schraffur dient in diesem Fall lediglich zur Abgrenzung der elektrischen Leiter aus einem elektrisch leitfähigen Material wie Kupfer gegen die Umgebende keramische Matrix. Sie stellt keinen Bezug zu einer bestimmten elektrischen Phase oder einem Verbindungselement zwischen den Phasen her. Der nach innen abstehende zweite Wickelkopf 5 ist über eine geeignete Stützstruktur 20, die ebenfalls aus Keramik bestehen kann, stabilisiert.

Figur 18 zeigt eine Legende der in den Figuren 10 bis 17 verwendeten Schraffuren und Symbolen. Die ersten drei Kästchen zeigen unterschiedliche Schraffuren für elektrischen Verbindungen der Phasen 1, 2 und 3. Das vierte Kästchen zeigt eine Schraffur für elektrische Verbindungen zwischen zwei Phasen. Das fünfte Kästchen zeigt ein Symbol für eine axiale Verbindung aus der Zeichenebene heraus zur vorherigen Wicklungsebene bzw. zu einem Axialleiter. Das sechste Kästchen zeigt ein Symbol für eine axiale Verbindung in die Zeichenebene hinein zur nachfolgenden Wicklungsebene bzw. zu einem Axialleiter. Das siebte Kästchen zeigt ein Symbol für eine axiale Verbindung sowohl aus der Zeichenebene heraus als auch in die Zeichenebene hinein.

### Bezugszeichenliste

- 1: Luftspaltwicklung
- 2: Hauptabschnitt
- 3: Achse
- 4: erster Wickelkopf
- 5: zweiter Wickelkopf
- 6: Axialleiter
- 7: innere Wickelkopfverbindung des ersten Wickelkopfs
- 8: mittlere Wickelkopfverbindung des ersten Wickelkopfs
- 9: äußere Wickelkopfverbindung des ersten Wickelkopfs
- 10: keramische Isolation
- 11: Wickelkopfverbindung in Ebene 1 des zweiten Wickelkopfs
- 12: Wickelkopfverbindung in Ebene 2 des zweiten Wickelkopfs
- 13: Wickelkopfverbindung in Ebene 3 des zweiten Wickelkopfs
- 14: Anschluss Phase 1
- 15: Anschluss Phase 2
- 16: Anschluss Phase 3
- 17: axiales Verbindungsstück zwischen den Ebenen 3 und 5 des ersten Wickelkopfs
- 18: axiales Verbindungsstück zwischen den Ebenen 1 und 3 des ersten Wickelkopfs
- 19: radiales Verbindungsstück zwischen Axialleiter und äußerer Wickelkopfverbindung des ersten Wickelkopfs
- 20: Stützstruktur
- A: Ebene 1 des ersten Wickelkopfs
- B: Ebene 2 des ersten Wickelkopfs
- C: Ebene 3 des ersten Wickelkopfs
- D: Ebene 4 des ersten Wickelkopfs
- E: Ebene 5 des ersten Wickelkopfs
- F: Ebene 1 des zweiten Wickelkopfs
- G: Ebene 2 des zweiten Wickelkopfs
- H: Ebene 3 des zweiten Wickelkopfs
- HL1: Leiterhöhe der Wickelkopfverbindungen in Ebene 1 und 2 des zweiten Wickelkopfs
- HL2: Leiterhöhe der Wickelkopfverbindungen in Ebene 3 des zweiten Wickelkopfs
- BL1: Leiterbreite der inneren Wickelkopfverbindungen des ersten Wickelkopfs
- BL2: Leiterbreite der mittleren und äußeren Wickelkopfverbindungen des ersten Wickelkopfs
- BL3: Leiterbreite der Wickelkopfverbindungen in Ebene 3 des zweiten Wickelkopfs
- BL4: Leiterbreite der Wickelkopfverbindungen in Ebene 1 und 2 des zweiten Wickelkopfs

## Patentansprüche

1. Additiv gefertigte Luftspaltwicklung (1) für eine elektrische Maschine, mit einem hohlzylindrischen Hauptabschnitt (2) mit einer geometrischen Achse (3), wobei der Hauptabschnitt eine aktive Wicklungslänge der Luftspaltwicklung definiert und im Hauptabschnitt elektrische Wicklungsleiter der Luftspaltwicklung von einem ersten axialen Ende der Luftspaltwicklung zu einem zweiten axialen Ende der Luftspaltwicklung verlaufen, sowie mit einem ersten Wickelkopf (4) am ersten axialen Ende der Luftspaltwicklung und einem zweiten Wickelkopf (5) am zweiten axialen Ende der Luftspaltwicklung, wobei in den Wickelköpfen Wickelkopfverbindungen (7, 8, 9, 11, 12, 13) der Wicklungsleiter verlaufen, **dadurch gekennzeichnet, dass** die Wickelköpfe (4, 5) radial nach innen und/oder außen über den hohlzylindrischen Hauptabschnitt (2) hervorstehen, wobei zumindest zwei der Wickelkopfverbindungen (7, 8, 9, 11, 12, 13) zumindest abschnittsweise derart in unterschiedlichen Abständen von der Achse verlaufen, dass die eine Wickelkopfverbindung die andere Wickelkopfverbindung zumindest abschnittsweise radial umschließt.

2. Luftspaltwicklung (1) nach Anspruch 1, **dadurch gekennzeichnet, dass** die sich radial umschließenden Wickelkopfverbindungen entlang von Kreiskurven mit unterschiedlichen Radien verlaufen.

3. Luftspaltwicklung (1) nach Anspruch 2, **dadurch gekennzeichnet, dass** der Mittelpunkt der Kreiskurven auf der Achse (3) liegt.

4. Luftspaltwicklung (1) nach Anspruch 2 oder 3, **dadurch gekennzeichnet, dass** die Wickelkopfverbindungen (7, 8, 9) im ersten Wickelkopf (4) entlang von Kreiskurven verlaufen, deren Radius größer oder im Wesentlichen gleich dem mittleren Radius des hohlzylindrischen Hauptabschnitts (2) ist, wobei die Wickelkopfverbindungen (11, 12, 13) im zweiten Wickelkopf (5) entlang von Kreiskurven verlaufen, deren Radius kleiner oder im Wesentlichen gleich dem mittleren Radius des hohlzylindrischen Hauptabschnitts (2) ist.

5. Luftspaltwicklung (1) nach einem der Ansprüche 1 bis 4, **dadurch gekennzeichnet, dass** zumindest einige der Wickelkopfverbindungen (7, 8, 9, 11, 12, 13) im ersten und oder zweiten Wickelkopf in unterschiedlichen Ebenen (A, B, C, D, E, F, G, H) verlaufen, welche axial voneinander beabstandet sind.

6. Luftspaltwicklung (1) nach Anspruch 5, **dadurch gekennzeichnet, dass** die unterschiedlichen Ebenen (A, B, C, D, E, F, G, H) senkrecht zur Achse (3) ausgerichtet sind.

7. Luftspaltwicklung (1) nach einem der Ansprüche 1 bis 6, **dadurch gekennzeichnet, dass** die Luftspaltwicklung (1) zumindest zwei Phasen aufweist, wobei die Wickelkopfverbindungen einer Phase axial oder radial versetzt zu den Wickelkopfverbindungen einer anderen Phase sind.

8. Luftspaltwicklung (1) nach Anspruch 7, **dadurch gekennzeichnet, dass** zwischen den Wickelkopfverbindungen (7, 8, 9, 11, 12, 13) unterschiedlicher Phasen am zweiten Wickelkopf (5) ein axialer Versatz besteht, wobei der zweite Wickelkopf (5) radial nach innen über den hohlzylindrischen Hauptabschnitt (2) hervorsteht.

9. Luftspaltwicklung (1) nach einem der Ansprüche 1 bis 8, **dadurch gekennzeichnet, dass** die wirksame Gesamtlänge aller Wickelkopfverbindungen einer einzelnen Phase der Luftspaltwicklung bei sämtlichen Phasen der Luftspaltwicklung im Wesentlichen gleich ist.

10. Luftspaltwicklung (1) nach Anspruch 9, **dadurch gekennzeichnet, dass** die Leiterquerschnittsfläche einzelner Wickelkopfverbindungen untereinander und/oder entlang einer einzelnen Wickelkopfverbindung variiert.

11. Luftspaltwicklung (1) nach Anspruch 9 oder 10, **dadurch gekennzeichnet, dass** diejenige Phase der Luftspaltwicklung, die am ersten Wickelkopf (4) die längsten Wickelkopfverbindungen aufweist, gleichzeitig am zweiten Wickelkopf (5) die kürzesten Wickelkopfverbindungen aufweist, wobei diejenige Phase der Luftspaltwicklung, die am ersten Wickelkopf (4) die kürzesten Wickelkopfverbindungen aufweist, gleichzeitig am zweiten Wickelkopf (5) die längsten Wickelkopfverbindungen aufweist.

12. Luftspaltwicklung (1) nach einem der Ansprüche 1 bis 11, **dadurch gekennzeichnet, dass** die Wicklungsleiter im Hauptabschnitt (2) parallel zur Achse (3) der Luftspaltwicklung (1) verlaufen.

13. Luftspaltwicklung (1) nach Anspruch 12, **dadurch gekennzeichnet, dass** die im Hauptabschnitt (2) zwischen den Wickelköpfen (4, 5) verlaufenden Abschnitte (6) der Wicklungsleiter jeweils einen Querschnitt aufweisen, der die Form eines Kreisringsektors hat, wobei der äußere und innere Kreisringbogen des Kreisringsektors vorzugsweise jeweils um einen Mittelpunkt auf der Achse (3) verlaufen.

14. Luftspaltwicklung (1) nach einem der Ansprüche 1 bis 13, **dadurch gekennzeichnet, dass** die Wicklungsleiter aus einem oder mehreren elektrisch leitenden Materialien gefertigt sind.

15. Luftspaltwicklung (1) nach einem der Ansprüche 1 bis 14, **dadurch gekennzeichnet, dass** die Wicklungsleiter von einer Isolation (10), bestehend aus einem oder mehreren Isolationsmaterialien, umgeben bzw. in die Isolation eingebettet sind.
